# EUROPEAN PATENT APPLICATION

(11) **EP 4 711 877 A1**
(43) Date of publication of application: **18.03.2026**
(21) Application number: 25200416.3
(22) Date of filing: 05.09.2025
(51) Int. Cl.: G05D 1/224, G05D 1/698, G05D 105/85, G05D 107/70, G05D 109/10

(54) **INFORMATION PROCESSING APPARATUS, INFORMATION PROCESSING METHOD, AND INFORMATION PROCESSING PROGRAM**

(30) Priority: 12.09.2024 JP 2024157981
(71) Applicant: Yokogawa Electric Corporation, Tokyo 180-8750 (JP)
(72) Inventor: Hara, Akari, Tokyo, 180-8750 (JP); Tanigawa, Youhei, Tokyo, 180-8750 (JP); Sakurai, Yasuki, Tokyo, 180-8750 (JP)
(74) Representative: Hoffmann Eitle

(57) **Abstract**

Provided is an information processing apparatus including: a virtual map acquisition unit which acquires a virtual map that is three-dimensional and corresponds to a real space in which a plurality of moving bodies move, the virtual map including an initial position and a destination position of movement of the moving body; an information acquisition unit which acquires position information regarding a position of each of the plurality of moving bodies and state information regarding a state of each of the plurality of moving bodies in the real space; and a display unit which displays the state information of each of the plurality of moving bodies at a position, on the virtual map, corresponding to the position of each of the plurality of moving bodies.

## Description

### BACKGROUND

### 1. TECHNICAL FIELD

The present invention relates to an information processing apparatus, an information processing method, and an information processing program.

### 2. RELATED ART

Patent Document 1 describes that "the map is a three-dimensional map," (claim 8). Patent Document 2 describes that "generates three-dimensional environmental map information based on distance information acquired by the distance sensor" (claim 1). Patent Document 3 describes "an autonomous moving body including an autonomous control unit for autonomous movement" (claim 1). Patent Document 4 describes that "makes it easy to find the floor treatment apparatus if an error state occurs in the floor treatment apparatus" (Abstract). Patent Document 5 describes "to improve the efficiency of a management job related to a moving body or a user thereof" (Abstract).

### Prior Art Documents

### Patent Documents

Patent Document 1: Japanese Patent No. 7452706
Patent Document 2: Japanese Patent Application Publication No. 2014-157478
Patent Document 3: International Publication No. 2019/181896
Patent Document 4: Japanese Patent Application Publication No. 2018-156644
Patent Document 5: Japanese Patent Application Publication No. 2022-180688

### SUMMARY

In a first aspect of the present invention, an information processing apparatus is provided. The information processing apparatus includes: a virtual map acquisition unit which acquires a virtual map that is three-dimensional and corresponds to a real space in which a plurality of moving bodies move, the virtual map including an initial position and a destination position of movement of each of the plurality of moving bodies; an information acquisition unit which acquires position information regarding a position of each of the plurality of moving bodies and state information regarding a state of each of the plurality of moving bodies in the real space; and a display unit which displays the state information of each of the plurality of moving bodies at a position, on the virtual map, corresponding to the position of each of the plurality of moving bodies. The state of the moving body may refer to a property of the moving body at a certain time point or a property that can change with the lapse of time. The state of the moving body may include a property identifiable in terms of the appearance of the moving body, and may include a property that is difficult to identify. The property identifiable in terms of the appearance of the moving body may be the shape of the moving body. The moving body may be able to be in a plurality of predetermined states. The plurality of predetermined states may be an operating state (ON state) and a non-operating state (OFF state). The operating state may include one or more states. The operating state may include a low-speed mode and a high-speed mode. Each of the plurality of moving bodies may be able to be in a plurality of predetermined states.

The state of each of the plurality of moving bodies may include a moving state of each of the plurality of moving bodies. The moving state of the moving body may be a property of change if the location of the moving body changes with the lapse of time. The moving state of the moving body may be at least one of a moving speed or a moving acceleration. The moving body may include a speedometer.

In any of the above information processing apparatuses, each of the plurality of moving bodies may move by power of a storage battery. The state of each of the plurality of moving bodies may include a remaining charge amount of the storage battery. The remaining charge amount of the storage battery may be a proportion of a current charge amount in a full charge amount of the storage battery.

In any of the above information processing apparatuses, if states of one or more moving bodies of the plurality of moving bodies become a predetermined state, the display unit may display, on the virtual map, indications for requesting instructions from an operator for the one or more moving bodies.

In any of the above information processing apparatuses, the display unit may display the indications at positions, on the virtual map, corresponding to positions of one or more moving bodies of the plurality of moving bodies when the states of the one or more moving bodies become the predetermined state.

Any of the above information processing apparatuses may further include a command transmission unit which, if the instruction is provided for any moving body of the one or more moving bodies for which the indications are displayed, transmits a command for improving the predetermined state to the any moving body instructed.

Any of the above information processing apparatuses may further include an order setting unit which sets a priority order of the moving bodies for which the instruction from the operator is to be requested, based on the state of each of the plurality of moving bodies. The display unit may display an indication including the priority order on the virtual map.

In any of the above information processing apparatuses, the state of each of the plurality of moving bodies may be whether or not each of the plurality of moving bodies is executing a role designated for each of the plurality of moving bodies.

In any of the above information processing apparatuses, a planned start time when each of the plurality of moving bodies starts to execute the role may be determined in advance. The state of each of the plurality of moving bodies may be advance or delay of an actual start time when each of the plurality of moving bodies has started to execute the role, with respect to the planned start time.

In any of the above information processing apparatuses, a first planned start time equivalent to the planned start time when any moving body of the plurality of moving bodies starts to execute a first role equivalent to the role and a second planned start time equivalent to the planned start time when the any moving body starts to execute a second role equivalent to the role may be determined in advance, and the second planned start time may be later than the first planned start time. The information acquisition unit may acquire a first actual start time equivalent to the actual start time when the any moving body has started to execute the first role and a second actual start time equivalent to the actual start time when the any moving body has started to execute the second role. The information acquisition unit may judge a magnitude relationship between a first difference between the first planned start time and the first actual start time and a second difference between the second planned start time and the second actual start time. If the second difference is greater than the first difference, the display unit may display, on the virtual map, the state information indicating that a state of the any moving body is a state that an operator is to watch.

In any of the above information processing apparatuses, if at least one specific moving body of the moving bodies is designated, the display unit may display an image obtained when the at least one specific moving body designated images the real space.

In any of the above information processing apparatuses, if at least one specific moving body of the moving bodies is designated, the display unit may display an image obtained when the at least one specific moving body designated images another moving body of the moving bodies.

In any of the above information processing apparatuses, a plurality of states including the state in which each of the plurality of moving bodies can be may be determined in advance. If one state among the plurality of states is designated, the display unit may display, on the virtual map, one or more moving bodies in the one state among the plurality of moving bodies and may not display one or more moving bodies in another state equivalent to the state.

In a second aspect of the present invention, an information processing method is provided. The information processing method includes: a virtual map acquisition step of acquiring a virtual map that is three-dimensional and corresponds to a real space in which a plurality of moving bodies move, the virtual map including an initial position and a destination position of movement of each of the plurality of moving bodies; an information acquisition step of acquiring position information regarding a position of each of the plurality of moving bodies and state information regarding a state of each of the plurality of moving bodies in the real space; and a display step of displaying the state information of each of the plurality of moving bodies at a position, on the virtual map, corresponding to the position of each of the plurality of moving bodies.

In a third aspect of the present invention, an information processing program is provided. The information processing program causes a computer to execute the information processing method.

The summary clause does not necessarily describe all necessary features of the embodiments of the present invention. In addition, the invention may also be a sub-combination of the features described above.

### BRIEF DESCRIPTION OF THE DRAWINGS

Fig. 1 is a schematic top view illustrating an example of a real space 110 in which a plurality of moving bodies 90 move.
Fig. 2 is a perspective view illustrating an example of a three-dimensional virtual map 120 corresponding to the real space 110.
Fig. 3 is a block diagram illustrating an example of an information processing apparatus 100.
Fig. 4 is a diagram illustrating an example of a display mode of a display unit 30.
Fig. 5 is a diagram illustrating another example of the display mode of the display unit 30.
Fig. 6 is a diagram illustrating another example of the display mode of the display unit 30.
Fig. 7 is a diagram illustrating another example of the display mode of the display unit 30.
Fig. 8 is a flowchart illustrating an example of an information processing method according to an embodiment of the present invention.
Fig. 9 is a diagram illustrating an example of a configuration of a computer 1200 in which a plurality of aspects of the present invention may be entirely or partially embodied.

### DESCRIPTION OF EXEMPLARY EMBODIMENTS

The present invention will be described below through embodiments of the invention, but the following embodiments do not limit the invention according to the claims. In addition, not all of the combinations of features described in the embodiments are essential to the solution of the invention.

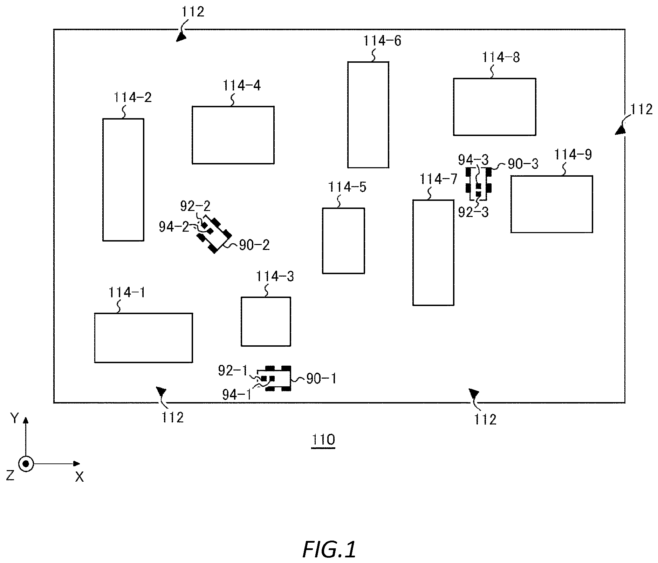

Fig. 1 is a schematic top view illustrating an example of a real space 110 in which a plurality of moving bodies 90 move. In the example of Fig. 1, the plurality of moving bodies 90 are moving bodies 90-1 to 90-3. The real space 110 is, for example, a space such as a plant. The real space 110 may be an indoor space or an outdoor space. The real space 110 may be a space that is difficult for humans to enter, such as a space where entry is highly dangerous due to environmental effects such as radiation or harmful gases or a space where entry itself is difficult due to the presence of obstacles or the like.

In the real space 110, a road surface 112 may be disposed, and a structure body 114 may be provided. If the real space 110 is a space such as a plant, the road surface 112 is a floor surface of the plant. The structure body 114 is, for example, an apparatus such as an instrument, a manufacturing apparatus, a fixture, or the like. The moving body 90 may travel on the road surface 112 or may fly in the air.

The moving body 90 may be a robot that can autonomously travel, or may be a robot that can be remotely controlled by a user of an information processing apparatus 100 (described later). The moving body 90 may include a control unit that controls the movement of the moving body 90. The moving body 90 may move by the power of a storage battery or may move by an energy source other than the storage battery. The storage battery may be mounted on the moving body 90. The moving body 90 may be a quadruped robot that moves while being in contact with the road surface 112, may be a caterpillar type or wheel type robot, or may be a drone that moves in the air. The moving body 90 may be a robot that patrols the real space 110.

Each of the plurality of moving bodies 90 may include an imaging unit 92 that images the real space 110. In this example, the moving bodies 90-1 to 90-3 include imaging units 92-1 to 92-3, respectively. An image obtained by imaging the real space 110 can include information regarding a physical quantity of a target in the real space 110.

The physical quantity of a target is, for example, the position, shape, gradient, width, or temperature of the road surface 112, the state of the road surface 112, the presence or absence of an obstacle on the road surface 112, the position, shape, or size of the structure body 114, or the like. The position of the target may be a relative position between a plurality of targets, may be a relative position with respect to a set reference position, or may be an absolute position such as latitude and longitude.

The state of the road surface 112 may be the arrangement of irregularities on the road surface 112, may be the presence or absence of cracks or the like, may be the state of whether or not the road surface 112 is wet, or may be the presence or absence of foreign matter such as sand on the road surface 112. The obstacle on the road surface 112 may refer to an object larger than a preset size (for example, at least one of a width, a depth, or a height), or may refer to an object that prevents the moving body 90 from moving due to the presence of the object. The imaging unit 92 may acquire physical quantities such as the position, shape, and size of the structure body 114 or the obstacle that obstructs the movement of the moving body 90, based on an image acquired in a state where the moving body 90 cannot move.

The physical quantity of the target may include air temperature, humidity, or the concentration of a specific gas (for example, carbon dioxide or the like) in the real space 110. The moving body 90 may include a sensor that acquires the air temperature, the humidity, or the concentration of a specific gas (for example, carbon dioxide or the like) in the real space 110.

The plurality of moving bodies 90 may include a position information acquisition unit 94 that acquires the position of the moving body 90 in the real space 110. The position information acquisition unit 94 is, for example, a global positioning system (GPS). In the example of Fig. 1, the moving bodies 90-1 to 90-3 include position information acquisition units 94-1 to 94-3, respectively.

In the present specification, technical matters may be described by using orthogonal coordinate axes of an X axis, a Y axis, and a Z axis. In the present specification, a plane parallel to the road surface 112 is defined as an XY plane, and a direction perpendicular to the road surface 112 is defined as a Z-axis direction. In the present specification, an arbitrary direction in the XY plane is defined as an X-axis direction, and a direction orthogonal to the X axis in the XY plane is defined as a Y-axis direction. The Z-axis direction may be a direction parallel to a vertical direction, and the XY plane may be a horizontal plane.

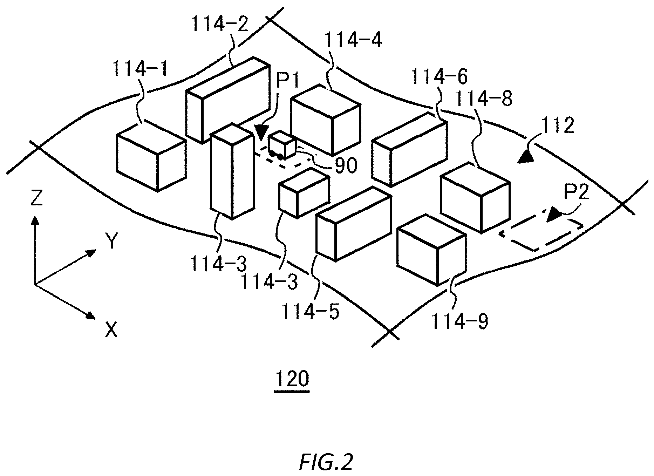

Fig. 2 is a perspective view illustrating an example of a three-dimensional virtual map 120 corresponding to the real space 110. The virtual map 120 may be an existing map or may be a map created based on an image captured by the imaging unit 92 of the moving body 90. The existing map is, for example, CAD data when the real space 110 is constructed, a Google map, or the like. The map created based on the image captured by the imaging unit 92 is, for example, a map created by a simultaneous localization and mapping (SLAM) technology or the like. Fig. 2 illustrates a region of the virtual map 120 corresponding to the real space 110.

The virtual map 120 includes information corresponding to a target of the real space 110. The target is one of the road surface 112 and the structure body 114 of the real space 110. Fig. 2 illustrates information corresponding to the road surface 112, the structure bodies 114-1 to 114-9, and the moving body 90 illustrated in Fig. 1. However, in Fig. 2, illustration of the moving bodies 90-1 and 90-3 in Fig. 1 is omitted.

The virtual map 120 includes an initial position P1 and a destination position P2 of the movement of the moving body 90. In Fig. 2, an example of the initial position P1 is indicated by a broken line, and an example of the destination position P2 is indicated by an alternate long and short dash line. The destination position P2 is a movement destination to which the moving body 90 is to move. The movement destination to which movement is to be made is, for example, the position of the structure body 114 of which the state is to be checked by the moving body 90. An operator 130 (described later) may designate the destination position P2 by a reception unit 62 (described later).

The initial position P1 is a position where the moving body 90 starts to move. The position where movement is started is a stop position of the moving body 90 in a case where the moving body 90 is stopped. The case where the moving body 90 is stopped may refer to a case where the moving body 90 is stopped after completing a designated role, or may refer to a case where the moving body 90 is temporarily stopped while the moving body 90 is executing the designated role. If the moving body 90 is moving, and the corresponding moving body 90 is designated as the moving body 90 that moves to the destination position P2, the position where movement is started may be the position of the corresponding moving body 90 when designated.

The position information acquisition unit 94 of the moving body 90 may acquire the initial position P1. The information acquisition unit 20 (described later) may acquire the initial position P1 acquired by the position information acquisition unit 94. The display unit 30 (described later) may display, on the virtual map 120, the initial position P1 acquired by the information acquisition unit 20.

The initial position P1 and the destination position P2 may be regions having a predetermined area or volume in the real space 110. The region having the predetermined area may be a region on the road surface 112. If the moving body 90 is a drone, the initial position P1 and the destination position P2 each may be a region on a space having a predetermined volume in the real space 110. The region on the space having a volume is, for example, a space of one or more rooms provided in the real space 110.

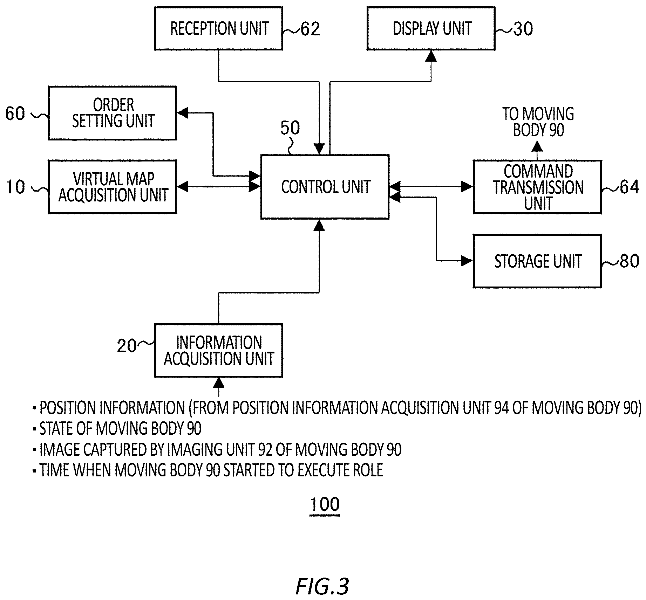

Fig. 3 is a block diagram illustrating an example of the information processing apparatus 100. The information processing apparatus 100 includes a virtual map acquisition unit 10, the information acquisition unit 20, the display unit 30, and a control unit 50. The display unit 30 is, for example, a display, a monitor, a screen of a smartphone, or the like. The information processing apparatus 100 may include an order setting unit 60, a reception unit 62, a command transmission unit 64, and a storage unit 80. The reception unit 62 is a mouse, a keyboard, a screen of a smartphone, or the like.

A part or the whole of the information processing apparatus 100 may be realized by a computer. The control unit 50 may be a central processing unit (CPU) of the computer. If the information processing apparatus 100 is realized by a computer, an information processing program for causing the computer to function as the information processing apparatus 100 may be installed in the computer, or an information processing program for causing an information processing method to be described later to be executed may be installed in the computer.

The virtual map acquisition unit 10 acquires the virtual map 120. The virtual map acquisition unit 10 may acquire the virtual map 120 via the Internet. The storage unit 80 may store the virtual map 120 acquired by the virtual map acquisition unit 10.

The information acquisition unit 20 acquires position information regarding the position of each of the plurality of moving bodies 90 in the real space 110. The information acquisition unit 20 may acquire the position information acquired by the position information acquisition unit 94 of each of the plurality of moving bodies 90. The information acquisition unit 20 may wirelessly acquire the position information acquired by the position information acquisition unit 94. The information acquisition unit 20 may acquire the position information of the moving body 90 moving in the real space 110 each time.

The information acquisition unit 20 acquires state information 96 (described later) regarding the state of each of the plurality of moving bodies 90 in the real space 110. The state of the moving body 90 refers to a property of the moving body 90 at a certain time point or a property that can change with the lapse of time. The state of the moving body 90 may include a property identifiable in terms of the appearance of the moving body 90, and may include a property that is difficult to identify. The property identifiable in terms of the appearance of the moving body 90 is, for example, the shape of the moving body 90.

The state of the moving body 90 may include a moving state of the moving body 90. The moving state of the moving body 90 is a property of change if the location of the moving body 90 changes with the lapse of time. The moving state of the moving body 90 is, for example, at least one of a moving speed or a moving acceleration. The moving body 90 may include a speedometer. The information acquisition unit 20 may wirelessly acquire the speed of the moving body 90 measured by the speedometer of the moving body 90. The information acquisition unit 20 may acquire the speed of the moving body 90 and acquire the time rate of change in speed (that is, acceleration) based on the acquired speed.

If the moving body 90 moves by the power of the storage battery, the state of the moving body 90 may be the remaining charge amount of the storage battery. The remaining charge amount of the storage battery may be a proportion of a current charge amount in a full charge amount of the storage battery.

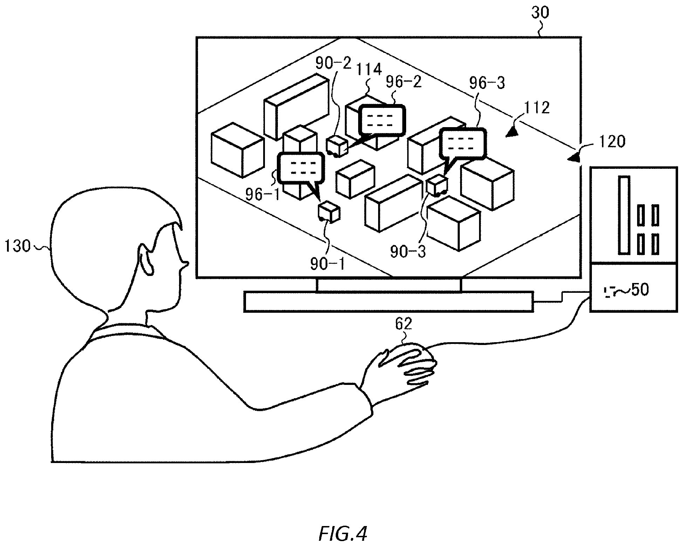

Fig. 4 is a diagram illustrating an example of a display mode of the display unit 30. The display unit 30 displays the state information 96 of each of the plurality of moving bodies 90 at the position, on the virtual map 120, corresponding to the position of each of the plurality of moving bodies 90. In the example of Fig. 4, state information 96-1 to 96-3 are the state information 96 of the moving bodies 90-1 to 90-3, respectively. In the example of Fig. 4, the display unit 30 displays the state information 96-1 to 96-3 at positions corresponding to the respective positions (see Fig. 1) of the moving bodies 90-1 to 90-3. Accordingly, the operator 130 can recognize the state of each of the plurality of moving bodies 90. In the example of Fig. 4, the state information 96 is character information indicating the state of the moving body 90. In the example of Fig. 4, the character information is shown in a speech bubble on the virtual map 120.

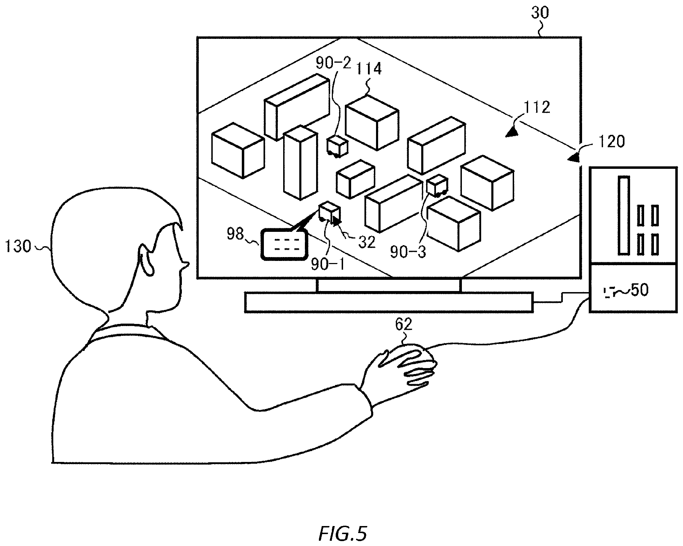

Fig. 5 is a diagram illustrating another example of the display mode of the display unit 30. If the state of the moving body 90 becomes a predetermined state, the display unit 30 may display, on the virtual map 120, an indication 98 requesting the operator 130 to provide an instruction for the moving body 90. The indication 98 may be characters or color. The indication 98 may be blinking of the target moving body 90 on the virtual map 120. In the example of Fig. 5, the indication 98 is a speech bubble containing words prompting attention to the target moving body 90-1.

If the moving body 90 is in the moving state, the predetermined state of the moving body 90 may be at least one of a predetermined speed or acceleration of the moving body 90. If the moving body 90 preferably moves at a speed lower than a specific speed, the predetermined speed of the moving body 90 may be the specific speed. The specific speed may be a speed determined in view of the moving performance of the moving body 90 (for example, a recommended moving speed). If it is preferable that the moving body 90 moves at an acceleration lower than a specific acceleration, the predetermined acceleration of the moving body 90 may be the specific acceleration. The specific acceleration may be an acceleration determined in view of the moving performance of the moving body 90.

If the moving body 90 moves by the power of the storage battery, the predetermined state of the moving body 90 may be the remaining charge amount of the storage battery. The predetermined state of the moving body 90 may be a proportion of a specific charge amount in a full charge amount of the storage battery. The specific charge amount may be the minimum charge amount to be maintained. For example, the predetermined state of the moving body 90 may be a charge amount of 1/2, a charge amount of 1/4, or a charge amount of 1/10 with respect to the full charge amount of the storage battery.

The display unit 30 may display the indication 98 at a position, on the virtual map 120, corresponding to the position of the moving body 90 when the state of the moving body 90 becomes a predetermined state. The position of the moving body 90 when the state of the moving body 90 becomes the predetermined state may refer to the position of the moving body 90 when the moving speed of the moving body 90 becomes the predetermined speed from a speed lower than the predetermined speed if the moving body 90 is moving, or may refer to the position of the moving body 90 when the moving acceleration of the moving body 90 becomes the predetermined acceleration from an acceleration lower than the predetermined acceleration if the moving body 90 is moving. The position of the moving body 90 when the state of the moving body 90 becomes the predetermined state may refer to the position of the moving body 90 when the proportion of the charge amount in the full charge amount of the storage battery becomes a specific proportion if the moving body 90 moves by the power of the storage battery.

The reception unit 62 receives an instruction for the moving body 90 on the virtual map 120. In the example of Fig. 5, the operator 130 gives an instruction for the moving body 90-1 on the display unit 30 by using a pointer 32 shown on the display unit 30. Giving the instruction for the moving body 90-1 on the display unit 30 may be performed by clicking, on the display unit 30, the moving body 90-1 displayed on the display unit 30.

If an instruction is provided for the moving body 90 for which the indication 98 is displayed, the command transmission unit 64 may transmit, to the instructed moving body 90, a command for improving a predetermined state. For example, the command for improving the predetermined state is a command for controlling, if the moving body 90 is traveling at a speed equal to or higher than a specific speed, the speed such that the moving body 90 travels at a speed lower than the specific speed. For example, the command for improving the predetermined state is a command for controlling, if the moving body 90 is accelerating or decelerating at an acceleration equal to or higher than a specific acceleration, the acceleration such that the moving body 90 accelerates or decelerates at an acceleration lower than the specific acceleration, respectively. The command for improving the predetermined state is a command for causing, If the proportion of the charge amount of the storage battery becomes a proportion of a specific charge amount in the full charge amount, the moving body 90 to decelerate or stop. When the command transmission unit 64 transmits the command to the instructed moving body 90, the moving body 90 can be improved from the predetermined state.

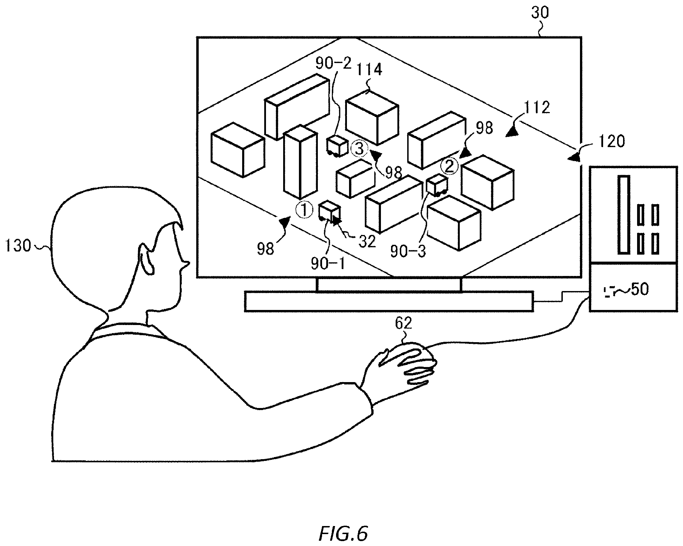

Fig. 6 is a diagram illustrating another example of the display mode of the display unit 30. The order setting unit 60 sets the priority order of the moving bodies 90 for which the instruction from the operator 130 is to be requested, based on the state of each of the plurality of moving bodies 90. For example, if the moving body 90 preferably moves at a speed lower than a specific speed Vs but is moving at a moving speed V equal to or higher than the specific speed Vs, the order setting unit 60 sets the priority order based on a difference between the speed V and the speed Vs. For example, the order setting unit 60 sets a higher priority order for the moving body 90 having a greater difference between the speed V and the speed Vs.

For example, if the moving body 90 preferably moves at a speed lower than a specific acceleration As but is accelerating at an acceleration A equal to or higher than the specific acceleration As, the order setting unit 60 sets the priority order based on a difference between the acceleration A and the acceleration As. For example, the order setting unit 60 sets a higher priority order for the moving body 90 having a greater difference between the acceleration A and the acceleration As.

For example, if the moving body 90 moves by the power of the storage battery and the proportion of the charge amount in the full charge amount of the storage battery is equal to or less than a specific proportion, the order setting unit 60 sets a higher priority order for the moving body 90 on which the storage battery having a less proportion of the charge amount is mounted.

The display unit 30 may display the indication 98 including the priority order on the virtual map 120. In the example of Fig. 6, the display unit 30 displays characters indicating the priority order on the virtual map 120. Accordingly, the operator 130 can recognize, on the virtual map 120, the moving body 90 for which an instruction is preferentially to be requested.

If the moving body 90 executes the role designated in the real space 110, the state of the moving body 90 may be whether or not the moving body 90 is executing the designated role. The role is, for example, monitoring of the road surface 112 or the structure body 114. The operator 130 may designate a role for each of the plurality of moving bodies 90 by using the reception unit 62. The designated role may be stored in the storage unit 80. The designated role may be transmitted to the moving body 90 by the command transmission unit 64.

The display unit 30 may display, on the virtual map 120, the indication 98 indicating whether or not the moving body 90 is executing the designated role. Accordingly, the operator 130 can recognize, on the virtual map 120, whether or not the moving body 90 is executing the designated role.

If the moving body 90 executes the designated role, a planned start time for starting the execution of the role may be determined in advance. The planned start time may be determined in advance by the operator 130. The planned start time may be stored in the storage unit 80. The planned start time may be transmitted to the moving body 90 by the command transmission unit 64.

An atomic clock may be mounted in the moving body 90. The moving body 90 may acquire the time of the atomic clock. The moving body 90 may acquire the time from the NTP server via the Internet.

If the moving body 90 has started to execute the designated role, the information acquisition unit 20 (see Fig. 3) acquires actual start time when the moving body 90 has started to execute the designated role. The actual start time is time acquired by the moving body 90. The information acquisition unit 20 acquires the state information 96 (see Fig. 5) indicating that the moving body 90 has started the execution of the designated role. The state information 96 may be information indicating the state of the moving body 90 at the actual start time.

The state of the moving body 90 may be advance or delay of the actual start time with respect to the planned start time. The information acquisition unit 20 may judge whether the actual start time is advanced or delayed with respect to the planned start time, based on the planned start time and the actual start time. If it is judged that the actual start time is advanced with respect to the planned start time, the information acquisition unit 20 may acquire, as advanced time, the time obtained by subtracting the planned start time from the actual start time. If it is judged that the actual start time is delayed with respect to the planned start time, the information acquisition unit 20 may acquire, as delayed time, the time obtained by subtracting the actual start time from the planned start time.

It may be difficult for the moving body 90 to start to execute the role at the planned start time. For example, if an obstacle is present on the road surface 112 while the moving body 90 is moving, it may be difficult for the moving body 90 to arrive at the position where the role is executed before the planned start time. For example, if the role of the moving body 90 is to monitor a plurality of structure bodies 114 (see Fig. 1) and it takes a longer time than planned to monitor one structure body 114, it may be difficult for the moving body 90 to start monitoring another structure body 114, which is planned to be monitored next to the one structure body 114, at the planned start time. In such a case, the actual start time may be delayed with respect to the planned start time.

The moving body 90 may start to execute the role before the planned start time. For example, if a sensor mounted on the moving body 90 detects that an abnormality has occurred in the structure body 114 planned to be monitored by the moving body 90, the moving body 90 may start to execute the role without waiting for the planned start time. In such a case, the actual start time may be advanced with respect to the planned start time.

The display unit 30 may display, on the virtual map 120, the indication 98 indicating the advance or delay of the actual start time when the moving body 90 has started to execute the role, with respect to the planned start time when the moving body 90 starts to execute the role. Accordingly, the operator 130 can recognize, on the virtual map 120, the advance or delay of the actual start time with respect to the planned start time.

If the moving body 90 sequentially executes a first role and a second role, first planned start time when the execution of the first role starts and second planned start time when the execution of the second role starts may be determined in advance. Herein, the second start time is time later than the first start time. For example, if the moving body 90 sequentially monitors a plurality of structure bodies 114, the first role is to monitor a first structure body 114 (for example, the structure body 114-1) and the second role is to monitor a second structure body 114 (for example, the structure body 114-2).

The information acquisition unit 20 (see Fig. 3) may acquire first actual start time when the moving body 90 has started to execute the first role. The information acquisition unit 20 may acquire the state information 96 (see Fig. 5) indicating that the moving body 90 has started to execute the first role. The information acquisition unit 20 may acquire second actual start time when the moving body 90 has started to execute the second role. The information acquisition unit 20 may acquire the state information 96 indicating that the moving body 90 has started to execute the second role.

The information acquisition unit 20 (see Fig. 3) may acquire a first difference between the first planned start time and the first actual start time and a second difference between the second planned start time and the second actual start time. If the first actual start time is delayed with respect to the first planned start time, the first difference may be time obtained by subtracting the first actual start time from the first planned start time. The second difference is also similar. If the first actual start time is advanced with respect to the first planned start time, the first difference may be time obtained by subtracting the first planned start time from the first actual start time. The second difference is also similar.

The information acquisition unit 20 may judge a magnitude relationship between the first difference and the second difference. If the second difference is greater than the first difference, the display unit 30 (see Fig. 3) may display, on the virtual map 120, the state information 96 indicating that the state of the moving body 90 is a state that the operator 130 is to watch. If the actual start time is delayed with respect to the planned start time and the second difference is greater than the first difference, the magnitude of the delay of the actual start time increases with the lapse of time. If the actual start time is advanced with respect to the planned start time and the second difference is greater than the first difference, the magnitude of the advance of the actual start time increases with the lapse of time. When the display unit 30 displays the state information 96 indicating that the state of the moving body 90 is a state that the operator 130 is to watch, the operator 130 can recognize that the moving body 90 is in a state to watch.

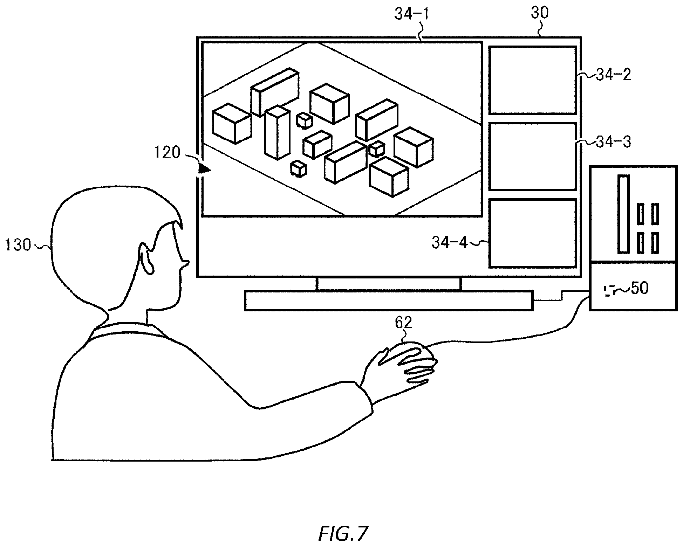

Fig. 7 is a diagram illustrating another example of the display mode of the display unit 30. The display unit 30 may be divided into a plurality of sections 34. In this example, the display unit 30 is divided into four sections 34 (sections 34-1 to 34-4). In this example, the virtual map 120 is displayed on the section 34-1. In the examples of Figs. 4 to 6, the virtual map 120 is displayed on the entire display unit 30. The information processing apparatus 100 may be switchable between the display mode of Figs. 4 to 6 and the display mode of Fig. 7.

The imaging unit 92 (see Fig. 1) of the moving body 90 captures an image of the real space 110. The image of the real space 110 may include an image of the road surface 112 or an image of the structure body 114. The image of the real space 110 may include an image of another moving body 90 (for example, the moving body 90-2) captured by the imaging unit 92 (for example, the imaging unit 92-1) of one specific moving body 90 (for example, the moving body 90-1). The information acquisition unit 20 (see Fig. 3) may acquire an image captured by the imaging unit 92.

The display unit 30 may display the image captured by the imaging unit 92 (see Fig. 1) of the moving body 90. For example, the display unit 30 may display, on the section 34-2, the image captured by the imaging unit 92-1, may display, on the section 34-3, the image captured by the imaging unit 92-2, and may display, on the section 34-4, the image captured by the imaging unit 92-3.

The operator 130 may designate at least one specific moving body 90 by using the reception unit 62. If at least one specific moving body 90 is designated, the display unit 30 may display the image captured by the imaging unit 92 of the designated moving body 90. For example, if the moving body 90-1 is designated, the display unit 30 may display the image captured by the imaging unit 92-1 on any one of the sections 34-1 to 34-3. The display unit 30 may display the image captured by the imaging unit 92 on the virtual map 120.

If at least one specific moving body 90 is designated, the display unit 30 may display the image obtained when the imaging unit 92 of the designated moving body 90 images another moving body 90. For example, if the moving body 90-1 is designated, the display unit 30 displays the image of the moving body 90-2 captured by the imaging unit 92-1. If the information acquisition unit 20 (see Fig. 3) cannot acquire the position information and the state information 96 of the moving body 90, the moving body 90 may be in an abnormal state. The abnormal state is, for example, a state where the moving body 90 cannot move due to falling, or the like. If there is a high probability that the moving body 90 is in an abnormal state, the display unit 30 displays the image obtained by imaging the corresponding moving body 90 by the moving body 90 different from the corresponding moving body 90, whereby the operator 130 can confirm, on the display unit 30, the actual state of the moving body 90 having a high probability of being in an abnormal state.

The moving body 90 may be able to be in a plurality of predetermined states. The plurality of predetermined states are, for example, an operating state (ON state) and a non-operating state (OFF state). The operating state may include one or more states. For example, the operating state includes a low-speed mode and a high-speed mode. Each of the plurality of moving bodies 90 may be able to be in a plurality of predetermined states.

The operator 130 may designate one state of the plurality of states by using the reception unit 62. If one state among the plurality of states is designated, the display unit 30 may display the moving body 90 in the one state on the virtual map 120, and may not display the moving body 90 in another state. For example, if the operating state is designated as the state of the moving body 90, the display unit 30 may display the moving body 90 in the operating state, and may not display the moving body 90 in the non-operating state. Accordingly, the visibility of the virtual map 120 for the operator 130 can be improved.

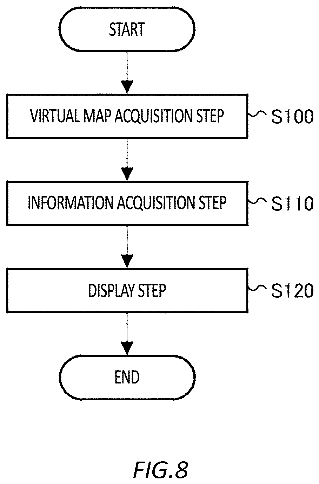

Fig. 8 is a flowchart illustrating an example of an information processing method according to an embodiment of the present invention. The information processing method according to the embodiment of the present invention will be described using the information processing apparatus 100 illustrated in Fig. 3 as an example. The information processing method includes a virtual map acquisition step S100, an information acquisition step S102, and a display step S104.

The virtual map acquisition step S100 is a step in which the virtual map acquisition unit 10 acquires the three-dimensional virtual map 120 corresponding to the real space 110 in which the plurality of moving bodies 90 move, the virtual map 120 including the initial position and the destination position of the movement of the moving body 90. The information acquisition step S102 is a step in which the information acquisition unit 20 acquires the position information regarding the position of each of the plurality of moving bodies 90 and the state information 96 regarding the state of each of the plurality of moving bodies 90 in the real space 110. The display step S104 is a step in which the display unit 30 displays the state information 96 of each of the plurality of moving bodies 90 at the position on the virtual map 120 corresponding to the position of each of the plurality of moving bodies 90.

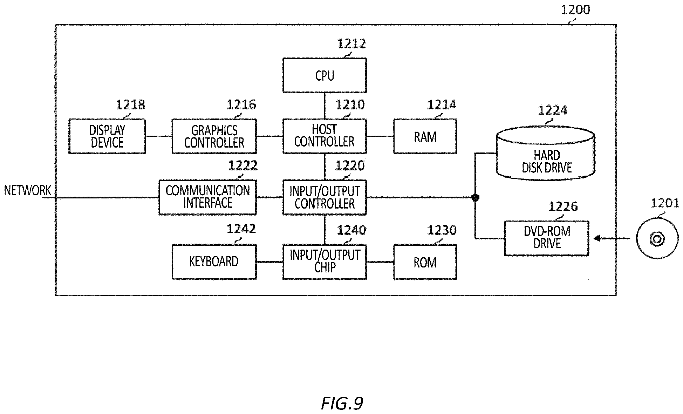

Fig. 9 is a diagram illustrating an example of a configuration of a computer 1200 in which a plurality of aspects of the present invention may be entirely or partially embodied. A program installed on the computer 1200 can cause the computer 1200 to function as an operation associated with an apparatus according to embodiments of the present invention or as one or more "unit(s)" of the apparatus, or to perform the operation or the one or more "unit(s)", and/or can cause the computer 1200 to perform processes according to embodiments of the present invention or steps of the processes. Such a program may be executed by a CPU 1212 to cause the computer 1200 to perform particular operations associated with some or all blocks in the flowcharts or block diagrams described herein. Processes according to embodiments of the present invention or steps of the processes may also be performed on a cloud network or the like.

The computer 1200 according to the present embodiment includes a CPU 1212, a RAM 1214, a graphics controller 1216 and a display device 1218, which are connected to each other by a host controller 1210. The computer 1200 also includes input/output units such as a communication interface 1222, a hard disk drive 1224, a DVD-ROM drive 1226 and an IC card drive, which are connected to the host controller 1210 via an input/output controller 1220. The computer also includes legacy input/output units such as a ROM 1230 and a keyboard 1242, which are connected to the input/output controller 1220 via an input/output chip 1240.

The CPU 1212 operates in accordance with programs stored in the ROM 1230 and the RAM 1214, and controls each unit accordingly. The graphics controller 1216 acquires image data generated by the CPU 1212 on a frame buffer or the like provided in the RAM 1214 or in the graphics controller 1216 itself, and displays the image data on the display device 1218.

The communication interface 1222 communicates with other electronic devices via a network. The hard disk drive 1224 stores programs and data to be used by the CPU 1212 in the computer 1200. The DVD-ROM drive 1226 reads programs or data from the DVD-ROM 1201, and provides the programs or data to the hard disk drive 1224 via the RAM 1214. The IC card drive reads the program and data from an IC card, and/or writes the program and data to the IC card.

The ROM 1230 has stored therein a boot program or the like to be executed by the computer 1200 at the time of activation, and/or a program that depends on the hardware of the computer 1200. The input/output chip 1240 may also connect various input/output units to the input/output controller 1220 via a parallel port, a serial port, a keyboard port, a mouse port or the like.

Programs are provided by a computer-readable storage medium such as the DVD-ROM 1201 or an IC card. The programs are read from the computer-readable storage medium, installed on the hard disk drive 1224, the RAM 1214 or the ROM 1230, which are also examples of a computer-readable storage medium, and executed by the CPU 1212. Information processing written in these programs is read by the computer 1200, and provides cooperation between the programs and the various types of hardware resources described above. An apparatus or method may be configured by achieving the operation or processing of information in accordance with the usage of the computer 1200.

For example, if communication is made between the computer 1200 and external devices, the CPU 1212 may execute a communication program loaded on the RAM 1214, and instruct the communication interface 1222 to perform communication processing based on the processing described in the communication program. Under the control of the CPU 1212, the communication interface 1222 reads transmission data stored in a transmission buffer region provided in a recording medium such as the RAM 1214, the hard disk drive 1224, the DVD-ROM 1201 or an IC card, and sends the read transmission data to the network, or writes reception data received from the network into a reception buffer region or the like provided in the recording medium.

The CPU 1212 may also make all or required portions of the files or databases stored in an external recording medium such as the hard disk drive 1224, the DVD-ROM drive 1226 (DVD-ROM 1201) or an IC card to be read by the RAM 1214, and perform various types of processing on the data on the RAM 1214. Next, the CPU 1212 may write the processed data back into the external recording medium.

Various types of information such as various types of programs, data, tables and databases may be stored in the recording medium for information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search the plurality of entries for an entry whose attribute value of the first attribute matches a designated condition, read the attribute value of the second attribute stored in the entry, and thereby acquire the attribute value of the second attribute associated with the first attribute that meets a predetermined condition.

The programs or software modules in the above description may be stored on the computer 1200 or a computer-readable storage medium near the computer 1200. Further, a recording medium such as a hard disk or a RAM provided in a server system connected to a dedicated communication network or the Internet can be used as a computer-readable storage media, which provides programs to the computer 1200 via the network.

While the present invention has been described by way of the embodiments, the technical scope of the present invention is not limited to the above-described embodiments. It is apparent to persons skilled in the art that various alterations or improvements can be made to the above-described embodiments. It is also apparent from the description of the claims that the form to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described by using phrases such as "first" or "next" for the sake of convenience in the claims, specification, and drawings, it does not necessarily mean that the process must be performed in this order.

### EXPLANATION OF REFERENCES

10: virtual map acquisition unit; 20: information acquisition unit; 30: display unit; 32: pointer; 34: section; 50: control unit; 60: order setting unit; 62: reception unit; 64: command transmission unit; 80: storage unit; 90: moving body; 92: imaging unit; 94: position information acquisition unit; 96: state information; 98: indication; 100: information processing apparatus; 110: real space; 112: road surface; 114: structure body; 120: virtual map; 130: operator; 1200: computer; 1201: DVD-ROM; 1210: host controller; 1212: CPU; 1214: RAM; 1216: graphics controller; 1218: display device; 1220: input/output controller; 1222: communication interface; 1224: hard disk drive; 1226: DVD-ROM drive; 1230: ROM; 1240: input/output chip; and 1242: keyboard.

## Claims

1. An information processing apparatus comprising:
a virtual map acquisition unit which acquires a virtual map that is three-dimensional and corresponds to a real space in which a plurality of moving bodies move, the virtual map including an initial position and a destination position of movement of each of the plurality of moving bodies;
an information acquisition unit which acquires position information regarding a position of each of the plurality of moving bodies and state information regarding a state of each of the plurality of moving bodies in the real space; and
a display unit which displays the state information of each of the plurality of moving bodies at a position, on the virtual map, corresponding to the position of each of the plurality of moving bodies.

2. The information processing apparatus according to claim 1, wherein the state of each of the plurality of moving bodies includes a moving state of each of the plurality of moving bodies.

3. The information processing apparatus according to claim 1 or 2, wherein
each of the plurality of moving bodies moves by power of a storage battery, and
the state of each of the plurality of moving bodies includes a remaining charge amount of the storage battery.

4. The information processing apparatus according to any one of claims 1 to 3, wherein if states of one or more moving bodies of the plurality of moving bodies become a predetermined state, the display unit displays, on the virtual map, indications for requesting instructions from an operator for the one or more moving bodies.

5. The information processing apparatus according to claim 4, wherein the display unit displays the indications at positions, on the virtual map, corresponding to positions of one or more moving bodies of the plurality of moving bodies when the states of the one or more moving bodies become the predetermined state.

6. The information processing apparatus according to claim 4 or 5, further comprising a command transmission unit which, if the instruction is provided for any moving body of the one or more moving bodies for which the indications are displayed, transmits a command for improving the predetermined state to the any moving body instructed.

7. The information processing apparatus according to any one of claims 4 to 6, further comprising
an order setting unit which sets a priority order of the moving bodies for which the instruction from the operator is to be requested, based on the state of each of the plurality of moving bodies, wherein
the display unit displays an indication including the priority order on the virtual map.

8. The information processing apparatus according to any one of claims 1 to 7, wherein the state of each of the plurality of moving bodies is whether or not each of the plurality of moving bodies is executing a role designated for each of the plurality of moving bodies.

9. The information processing apparatus according to claim 8, wherein
a planned start time when each of the plurality of moving bodies starts to execute the role is determined in advance, and
the state of each of the plurality of moving bodies is advance or delay of an actual start time when each of the plurality of moving bodies has started to execute the role, with respect to the planned start time.

10. The information processing apparatus according to claim 9, wherein
a first planned start time equivalent to the planned start time when any moving body of the plurality of moving bodies starts to execute a first role equivalent to the role and a second planned start time equivalent to the planned start time when the any moving body starts to execute a second role equivalent to the role are determined in advance, and the second planned start time is later than the first planned start time,
the information acquisition unit acquires a first actual start time equivalent to the actual start time when the any moving body has started to execute the first role and a second actual start time equivalent to the actual start time when the any moving body has started to execute the second role,
the information acquisition unit judges a magnitude relationship between a first difference between the first planned start time and the first actual start time and a second difference between the second planned start time and the second actual start time, and
if the second difference is greater than the first difference, the display unit displays, on the virtual map, the state information indicating that a state of the any moving body is a state that an operator is to watch.

11. The information processing apparatus according to any one of claims 1 to 10, wherein
if at least one specific moving body of the moving bodies is designated, the display unit displays an image obtained when the at least one specific moving body designated images the real space.

12. The information processing apparatus according to claim 11, wherein if at least one specific moving body of the moving bodies is designated, the display unit displays an image obtained when the at least one specific moving body designated images another moving body of the moving bodies.

13. The information processing apparatus according to any one of claims 1 to 12, wherein
a plurality of states including the state in which each of the plurality of moving bodies can be are determined in advance, and
if one state among the plurality of states is designated, the display unit displays, on the virtual map, one or more moving bodies in the one state among the plurality of moving bodies and does not display one or more moving bodies in another state equivalent to the state.

14. An information processing method comprising:
acquiring a virtual map that is three-dimensional and corresponds to a real space in which a plurality of moving bodies move, the virtual map including an initial position and a destination position of movement of each of the plurality of moving bodies;
acquiring information by acquiring position information regarding a position of each of the plurality of moving bodies and state information regarding a state of each of the plurality of moving bodies in the real space; and
displaying the state information of each of the plurality of moving bodies at a position, on the virtual map, corresponding to the position of each of the plurality of moving bodies.

15. An information processing program which causes a computer to execute the information processing method according to claim 14.
